(19) **Europäisches Patentamt European Patent Office Office européen des brevets**

(11) **EP 4 715 462 A1**

(12) **EUROPEAN PATENT APPLICATION**

(43) Date of publication:
25.03.2026 Bulletin 2026/13

(21) Application number: 25202525.9

(22) Date of filing: 16.09.2025

(51) International Patent Classification (IPC):
*G02F 1/225* (2006.01)

(52) Cooperative Patent Classification (CPC):
**G02F 1/225;** G02F 2203/15

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 19.09.2024 US 202418889520

(71) Applicant: Nokia Solutions and Networks Oy
02610 Espoo (FI)

(72) Inventors:
• SAYEM, Ayed al
Chatham, NJ (US)
• EARNSHAW, Mark
Berkeley Heights, NJ (US)
• HUANG, Heqing
Chatham, NJ (US)

(74) Representative: Nokia EPO representatives
Nokia Technologies Oy
Karakaari 7
02610 Espoo (FI)

(54) **OPTICAL WAVEGUIDE MODULATOR**

(57) A photonic integrated circuit for modulating light includes an electro-optic modulator disposed along a top surface of a substrate. The electro-optic modulator includes an optical waveguide segment connected between two optical waveguide loop mirrors. At least one of the two optical waveguide loop mirrors includes a Mach-Zehnder modulator (MZM) having a pair of 2x2 optical couplers at opposite ends thereof to couple light in and out of the MZM, one of the 2x2 couplers being terminated by a waveguide loop.

FIG. 1

EP 4 715 462 A1

## Description

### TECHNICAL FIELD

The present invention relates to integrated optical devices including optical waveguide modulators.

### BACKGROUND

Data center interconnects and broad-band telecom networks make use of optical communication modules to process the high data rates of internet traffic. Optical transceiver capable of high data rates typically use traveling-wave (TW) optical waveguide modulators, such as Mach-Zehnder modulators (MZMs) having optical waveguide arms extending along traveling-wave electrodes (TWE). Typically, the so-called "Vpi" drive voltage, $V_\pi$, of the modulator that is required to achieve a desired modulation depth is inversely proportional to the length L of the electro-optical (EO) interaction in the modulator ("modulator length"). A useful characteristic of such modulators is the voltage-length product "VpiL", which is a product of the $V_\pi$ voltage for the modulator and the modulator length L. Using optical materials having a large Pockels effect, such as e.g. lithium niobate ($LiNbO_3$, "LN"), in the waveguide arms of an MZM, enables photonic-chip integrated optical modulators with relatively low values of the $V_\pi L$ (~2-2.5Vcm) having a modulation bandwidth exceeding 100 GHz. Still, the driving voltage of such modulators typically requires RF amplifiers, which ultimately limit the achievable modulation bandwidth and dominate the power consumption.

### SUMMARY

According to an example embodiment, provided is an apparatus. The apparatus includes an electro-optic (EO) modulator and comprising an optical waveguide segment connected between two optical waveguide loop mirrors, wherein at least one of the two optical waveguide loop mirrors comprises a Mach-Zehnder modulator (MZM). The optical waveguide segment and the two optical waveguide loop mirrors may form a Fabry-Perot cavity.

Some implementations of the apparatus may comprise an input optical waveguide connected to launch light into the Fabry-Perot cavity via one of the two optical waveguide loop mirrors. Some implementations of the apparatus may further comprise an output optical waveguide connected to output modulated light from the Fabry-Perot cavity via one of the two optical waveguide loop mirrors.

In any of the above implementations, one of the two optical waveguide loop mirrors may comprise at least one optical waveguide coupler connected to a loop optical waveguide. In some implementations, the optical waveguide segment may comprise an electrically tunable section.

In any of the above implementations, the MZM may comprise a layer of ferro-electric material disposed over a substrate. The ferro-electric material may comprise one of: Lithium Niobate, Lithium Tantalate, or Barium Titanate.

In any of the above implementations, the MZM may comprise two optical waveguide arms connected between two optical waveguide couplers. The at least one of the two optical waveguide loop mirrors may further comprise a loop waveguide interconnecting two ports of one of the two optical waveguide couplers. At least one of the optical waveguide couplers may be, e.g., a directional optical waveguide coupler.

In any of the above implementations, the EO modulator may comprise a set of electrodes configured to electro-optically modulate light in the MZM.

In any of the above implementations, one of the two optical waveguide loop mirrors may comprise the MZM, and the other of the two optical waveguide loop mirrors may comprise at least one of: another MZM or a Mach-Zehnder interferometer (MZI). In some implementations, the MZI may comprise a bias tuning section.

A related aspect of the present disclosure provides an apparatus comprising an EO modulator integral with a substrate. The EO modulator comprises a ferro-electric layer disposed over a surface of the substrate, and a planar optical waveguide FP cavity formed, at least in part, in the ferro-electric layer. The FP cavity comprises two planar optical waveguide loop mirrors and an optical waveguide segment connected therebetween, wherein at least one of the two optical waveguide loop mirrors comprises an MZM. The ferro-electric layer may comprise one of: thin-film Lithium Niobate, thin-film Lithium Tantalate, and thin-film Barium Titanate.

A related aspect of the present disclosure provides a method for modulating light. The method comprises launching the light into an optical waveguide FP cavity comprising two optical waveguide loop mirrors and an optical waveguide segment connected therebetween, at least one of the two optical waveguide loop mirrors comprising an MZM. The method further comprises applying a modulating electrical signal to the MZM to modulate a coupling of the light into the FP cavity and/or a coupling of modulated light out of the FP cavity.

In some implementations, the method may comprise launching the light into the FP cavity via one of the two optical waveguide loop mirrors and outputting the modulated light from the other one of the two optical waveguide loop mirrors.

In some implementations, the method may comprise launching the light into the FP cavity via one of the two optical waveguide loop mirrors and collecting light reflected from said optical waveguide loop mirror as the modulated light.

Any of the above implementations of the method may comprise electro-optically or thermally tuning a refractive index in the optical waveguide segment to adjust a resonant wavelength of the FP cavity.

Any of the above implementation of the method may comprise using an electrically tunable Mach-Zehnder interferometer (MZI) in one of the two optical waveguide loop mirrors to tune at least one of: coupling of the light into the FP cavity, coupling of the light out of the FP cavity, and the finesse of the FP cavity.

In any of the above implementation of the method, one of the two optical waveguide loop mirrors may be absent of the MZM. In some of such implementation, the method may comprise launching the light into the FP cavity via the one of the two optical waveguide loop mirrors comprising the MZM; in some other implementation, the method may comprise launching the light into the FP cavity via the one of the two optical waveguide loop mirrors absent of the MZM.

An aspect of the present disclosure provides an apparatus comprising means for launching light into an FP cavity, means for collecting modulated light from the FP cavity, and means for electro-optically modulating at least one of: coupling the light into the FP cavity, and coupling the modulated light out of the FP cavity. In some implementations, the apparatus according to this aspect may include means for tuning a resonant wavelength of the FP cavity. In some implementations, the means for tuning the resonant wavelength of the FP cavity may include a thermal or electro-optic tuner. In any of the above implementations of the apparatus according to this aspect, the apparatus may include means for tuning a reflectance of one of FP cavity mirrors. In some implementations, the means for tuning the reflectance of the one of FP cavity mirrors may include a thermal or electro-optic tuner. In any of the above implementations of the apparatus according to this aspect, the means for modulating the coupling of light into the FP cavity and/or the means for modulating the coupling of light out of the FP cavity may include an optical waveguide modulator located in a mirror of the FP cavity. The optical waveguide modulator may be, e.g., an optical waveguide MZM.

## BRIEF DESCRIPTION OF THE DRAWINGS

Embodiments disclosed herein will be described in greater detail with reference to the accompanying drawings that represent example embodiments thereof, which are not to scale, in which like elements are indicated with like reference numerals, and wherein:

FIG. 1 is a block diagram schematically illustrating an example photonic integrated circuit (PIC) implementing a planar Fabry-Perot (FP) filter having loop-terminated 2x2 optical waveguide couplers as FP cavity mirrors;

FIG. 2 is a block diagram schematically illustrating an example integrated optical FP modulator based on the planar FP filter of FIG. 1 having a Mach-Zehnder modulator (MZM) in one of the FP cavity mirrors;

FIG. 3 is a schematic plan view of an example PIC implementing an optical FP modulator using loop-terminated MZMs in each of the two FP cavity mirrors;

FIG. 4 is a schematic plan view of an example PIC implementing an optical FP modulator having a loop-terminated MZM in one of the two planar FP cavity mirrors and heater-based biasing;

FIG. 5 is a schematic plan view of an embodiment of the PIC of FIG. 4 including a tunable Mach-Zehnder interferometer (MZI) in the other of the two FP cavity mirrors;

FIG. 6 is a schematic plan view of an embodiment of the PIC of FIG. 5 with electro-optical (EO) tuners for MZM, FP, and MZI biasing;

FIG. 7A illustrates a schematic cross-section of an MZM section of a photonic chip implementing the optical FP modulator of FIGs. 4, 5, or 6;

FIG. 7B illustrates a schematic cross-section of a thermal bias tuner section of the photonic chip implementing the optical FP modulator of FIGs. 4 or 5;

FIG. 8 is a graph showing simulated transmission characteristic of an example thin-film LN (TFLN) optical FP/MZM modulator of FIGs. 4, 5, or 6 versus an MZM drive voltage for the MZM lengths or 10mm, 7.5mm, 5mm, and 2.5mm;

FIG. 9 is a graph showing simulated electrical bandwidth and the Vpi voltage versus the MZM length for the example TFLN FP modulator of FIG. 8;

FIG. 10 is a flowchart of a method for modulating light according to an embodiment.

## DETAILED DESCRIPTION OF SOME SPECIFIC EMBODIMENTS

In the following description, for purposes of explanation and not limitation, specific details are set forth, such as particular circuits, circuit components, techniques, etc. in order to provide a thorough understanding of the example embodiments described herein. However, it will be apparent to one skilled in the art that the present invention may be practiced in other embodiments that depart from these specific details. In other instances, detailed descriptions of well-known methods, devices, and circuits may be omitted so as not to obscure the description of the example embodiments. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Furthermore, the following abbreviations and acronyms may be used in the present document:

"CMOS" Complementary Metal-Oxide-Semiconductor
"EO" Electro-Optical
"Si" Silicon
"LN" Lithium Niobate
"LNOI" Lithium Niobate on Insulator
"LT" Lithium Tantalate
"TFLN" Thin-Film Lithium Niobate
"TFLT" Thin-Film Lithium Tantalate

"PIC" Photonic Integrated Circuit
"SOI" Silicon on Insulator
"SiP" Silicon Photonics

"TW" Traveling Wave
"TWE" Traveling Wave Electrode
"FP" Fabry Perot
"MZI" Mach-Zehnder Interferometer
"MZM" Mach-Zehnder Modulator
"RF" Radio Frequency
"FSR" Free Spectral Range
"VpiL" Voltage-Length Product
"WLM" Waveguide Loop Mirror
"TT" thermal tuner
"EOT" electro-optic tuner
"CPW" co-planar waveguide

Note that as used herein, the terms "first", "second", and so forth are not intended to imply sequential ordering, but rather are intended to distinguish one element from another, unless explicitly stated. Similarly, sequential ordering of method steps does not imply a requirement of sequential order of their execution, unless explicitly stated. The term "vertical" refers to a direction generally perpendicular to a surface of the substrate along which relevant integrated circuitry is disposed. The term "horizontal" refers to a direction along the surface of the substrate. The phrase "such as", when preceded by a comma ("... , such as ..."), means that the nouns introduced by "such as" must be understood as examples, not as definitions. In other words, the phrase "such as", when preceded by a comma, is synonymous with "e.g." or "for example".

Conventional integrated photonic transmitters for high data rate communications typically use traveling-wave waveguide-based Mach-Zehnder modulators (MZMs) with co-planar transmission line electrodes. One important parameter of such modulators is a voltage-length product, referred to herein as "VpiL", where L is the length of the drive electrodes along the MZM arms, referred to hereinbelow as the "modulator length". The "Vpi" conventionally stands for the voltage $V_\pi$ required to induce a relative optical phase of $\pi$ between two light signals travelling along the MZM arms. As the relative optical phase of the light signals in the MZM arms is not easily measurable, the voltage Vpi is typically estimated as the voltage required to switch the optical power of light at the modulator output between some maximum transmitted power (nominal "1") and some minimum transmitted power (nominal "0"), typically corresponding to 15-20 dB of added attenuation. The VpiL value characterizes different trade-offs of the modulator design, including a trade-off between the voltage needed to drive the modulator and the modulator bandwidth. This is because the modulation bandwidth of, e.g., TFLN MZMs is typically limited by the microwave loss of the co-planar transmission line electrodes, and thus decreases as the modulator length L increases. For a typical traveling-wave MZM on a silicon substrate TFLN platform, the microwave propagation loss may be about 0.65-0.7dB/cm/$\sqrt{}$(GHz). This microwave loss typically sets an upper limit on the length L of the modulator for a target modulator bandwidth, and thus also the lower limit of the V$\pi$. Using, e.g., SOI substrates with silicon undercut or quartz substrates for the modulator chip instead of conventional SOI substrates can lower the VpiL limit of the MZM. However, such substrates are either not well suited for thermal management or complicate the fabrication process. Even with such substrates, reducing the driving voltage of a TFLN-based MZM to levels available from CMOS circuits, about 0.8-0.7V typically, may still require long modulators, e.g. with L $\geq$2cm. Accordingly, conventional traveling-wave MZMs typically require the use of RF amplifiers to amplify CMOS-generated data signals, which imposes additional power consumption, bandwidth, cost, and footprint constraints.

Examples described below relate to optical waveguide modulators that are suitable for photonic chip integration and address one or more of the issues described above. The modulators include a planar Fabry-Perot (FP) cavity having an integrated electro-optical (EO) MZM in one or both of the FP cavity mirrors. Driving the MZM in the FP mirror with an RF drive signal modulates the coupling of light into and/or out of the FP cavity, thereby modulating the transmission of light through the FP cavity, while conveniently keeping the free spectral range (FSR) and the resonance wavelengths of the FP cavity unchanged. Such coupling-mediated optical FP/MZM modulators may be configured to use lower drive voltages than their constituent MZMs, effectively reducing the VpiL limit of the modulator, and thus potentially enabling high-speed modulation in a smaller footprint and/or eliminating an RF driver amplifier between a CMOS signal source and the modulator.

In the examples described, at least one of the FP cavity mirrors includes an optical waveguide MZI comprising 2x2 integrated photonic couplers for coupling light in and out of the optical waveguide arms of the MZI, with free ports of one of the couplers being interconnected by an optical waveguide loop so that the MZI operates in reflection ("loop-terminated MZI"). The MZI may be provided with a set of TW drive electrodes, to form a loop-terminated TW MZM. The described FP/MZM modulator design may enable reducing the drive voltage, of e.g., TFLN modulators on SOI substrates down to levels available from CMOS circuits (~0.7-0.8V), without either sacrificing the modulation bandwidth or requiring a substrate undercut.

The present disclosure describes examples of the FP/MZM modulators using EO materials, such as TFLN, in the MZM arms to modulate the output light of the modulator. However, the disclosure is not limited to MZMs based on such materials, and other implementations may include MZMs with optical waveguide arms comprising other materials with electrically controllable refractive index, such as semiconductor waveguides with p/n junctions.

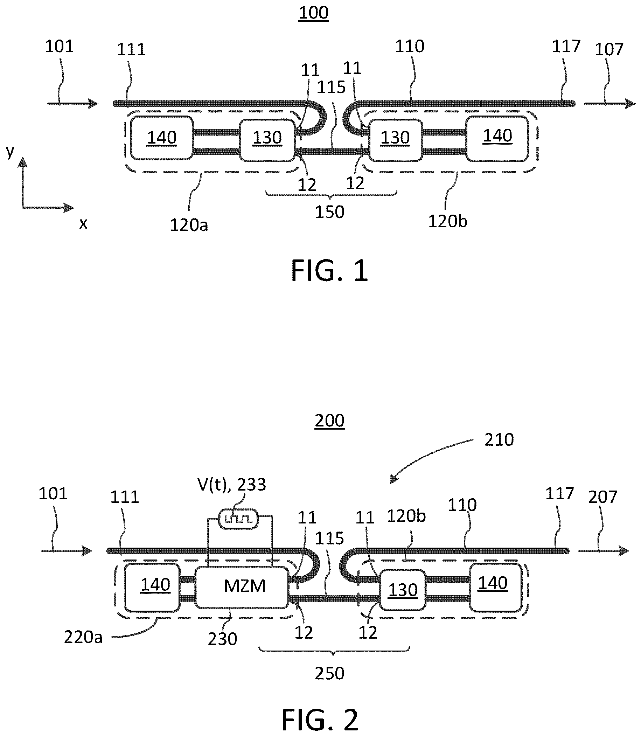

FIG. 1 is a block diagram schematically illustrating a resonant optical filter 100 that may be implemented as a photonic integrated circuit (PIC). The resonant optical filter 100 includes an optical waveguide 110 configured to form an integrated, e.g. planar, Fabry-Perot (FP) cavity 150 connected between two end segments, 111 and 117, of the optical waveguide 110. The resonant optical filter 100 may be referred to herein as the FP filter 100. The end waveguide segments 111 and 117 may function as input and/or output optical waveguide ports of the FP filter 150. The FP cavity 150 includes an optical waveguide segment 115 connected between two waveguide loop mirrors (WLMs), 120a and 120b, acting as front and rear mirrors of the FP cavity 150 ("FP cavity mirrors"). The WLMs 120a and 120b may be commonly referred to as the WLMs 120. In some example implementations, the WLMs 120 are two-port waveguide reflectors configurable so that light received into one of the two ports may be partly reflected back via the same port and partly transmitted via the other of the two ports. In the example illustrated in FIG. 1, each of the WLMs 120 includes an input/output port 11 for connecting to one of the end waveguide segments 111 and 117, and a "cavity" port 12. The "cavity" ports 12 of the WLMs 120a and 120b are interconnected by the optical waveguide segment 115. The WLMs 120 are configured so that a fraction of light received into the cavity port 12 from the optical waveguide segment 115 is reflected back into the FP cavity 150. In the illustrated example, each of the WLMs 120 includes a 2x2 optical coupler 130 ("coupler 130"), e.g. an integrated photonic coupler, with ports 11 and 12 being one of the two pairs of optical ports of the 2x2 coupler 130. Each 2x2 coupler 130 is "terminated" at one side thereof by a loop waveguide 140, which interconnects the remaining pair of optical ports of the coupler 130, i.e. the two ports at the side of the coupler 130 opposite the FP cavity 150. In the illustrated example, the WLMs 120a and 120b serve as a front and back mirror of the FP cavity 150, respectively, cooperating to cause some fraction of the input light 101 to propagate through the optical waveguide segment 115 multiple times, bouncing off the WLMs 120 at each pass.

The light 107 transmitted through (or reflected from) the FP filter 100 may be modulated by modulating the coupling of light in and/or out of the FP cavity 150 by one, or both, of the couplers 130. In configurations enabling such modulation, the FP filter 100 may function as a coupling-mediated optical modulator, with the modulation of the output light 107 being more efficient when the wavelength $\lambda$ of the input light 101 is at or near one of the cavity resonances of the FP filter 100.

FIG. 2 schematically illustrates an example PIC 210 implementing an optical modulator 200. The optical modulator 200 is a modification of the FP filter 100, in which the 2x2 optical coupler 130 in one of the FP cavity mirrors, e.g. the WLM 120a, is replaced with an integrated 2x2 Mach-Zehnder modulator (MZM) 230. The optical modulator 200, which may also be referred to as the FP modulator or the FP/MZM modulator, includes many of same elements as the FP filter 100, which are indicated in FIGs. 1 and 2 with same reference numerals, and which function as described above. Similar to the WLM 120, two optical ports at one ("distal") end of the MZM 230 are interconnected ("terminated") by the loop waveguide 140 to form a WLM 220a, with the remaining ports 11 and 12 of the MZM 230 being the input/output ports of the WLM 220a. The end waveguide segments 111 and 117 may be used as the optical waveguide ports of the FP modulator 200. The optical fiber segment 115 connects the WLM 220a with the WLM 120b to form an FP cavity 250. In some implementations, the 2x2 optical coupler 130 in the other FP cavity mirror, the WLM 120b, may be replaced with an MZI, which may or may not be electrically tunable.

The MZM 230 enables modulating output light 207 of the optical modulator 200 by modulating the coupling of light, e.g. 101, in or out of the FP cavity 250. The coupling of light 101 into the FP cavity 250 may be modulated when the input light 101 is launched into the FP cavity 250 via the "active" WLM 220a. The coupling of light out of the FP cavity 250 may be modulated, e.g., when the output modulator light 207 leaves the FP cavity 250 via the WLM 220a. In some implementations, the optical modulator 200 may be operated in transmission, wherein the input light 101 enters the modulator 200 via one of the end waveguide segments 111 or 117, and the output light 207 leaves the modulator 200 via the other one of the end waveguide segments, 117 or 111 respectively. In some implementations, the optical modulator 200 may be configured to operate in reflection, where both the input light 101 and the output light 207 propagate via the same one of the end waveguide segments 111 or 117; in such implementations, the other one of the end waveguide segments, 117 or 111 respectively, may be absent.

By way of example, in operation the input light 101 may be launched, e.g., into the first WLM 220a via port 11 and the end waveguide segment 111. The end waveguide segment 111 serves in this example as the input optical waveguide, or the input optical port, of the modulator 200. The MZM 230 and the loop waveguide 140 cooperate to direct a first fraction $|\kappa_{11}|^2 \leq 1$ of the light 101 to couple into the optical waveguide segment 115 (FP cavity 250) via port 12 as in-coupled light, and to direct a second fraction $|\kappa_{12}|^2$ of the light 101 to leave the WLM 220a via port 11 as "lost light". The lost light may then be absorbed somewhere in the system. The complex coefficient $\kappa_{11}$ describes the coupling of light into the FP cavity 250 by the WLM 220a, which may be electro-optically modulated by an electrical RF signal V(t) 233 applied to the MZM 230. The in-coupled light adds to the light already present in the cavity 250 and propagating toward the WLM 120b. The WLM 120b reflects a fraction $|\kappa_{21}|^2 \leq 1$ of the received light back into the FP cavity 250 to propagate toward the WLM 220a and transmits the second fraction $|\kappa_{22}|^2$ of the received light via the output port 11 and the waveguide 117 as the output light 207 of the FP optical modulator 200. The (complex) transfer function T of the FP filter 200 may be approximately described by the following equation (1):

$$T = \frac{\kappa_{11} \cdot \kappa_{22} \cdot \eta}{1 - \kappa_{12} \cdot \kappa_{21} \eta^2 \exp(j\phi)} \qquad (1)$$

where $\eta \leq 1$ accounts for the optical propagation loss in the waveguide segment 115, $\phi$ is the optical phase accrued after a round-trip in the waveguide segment 115, with $|T|^2$ describing the optical power transmission through the FP cavity 250. At resonances the total optical phase accrued after a round-trip in the FP cavity and reflections from the WLMs 220 is an integer multiple of $2\pi$, and the modulator transmission is proportional to the product $|\eta \cdot \kappa_{11} \cdot \kappa_{22}|^2$ amplified at resonances by a cavity effect.

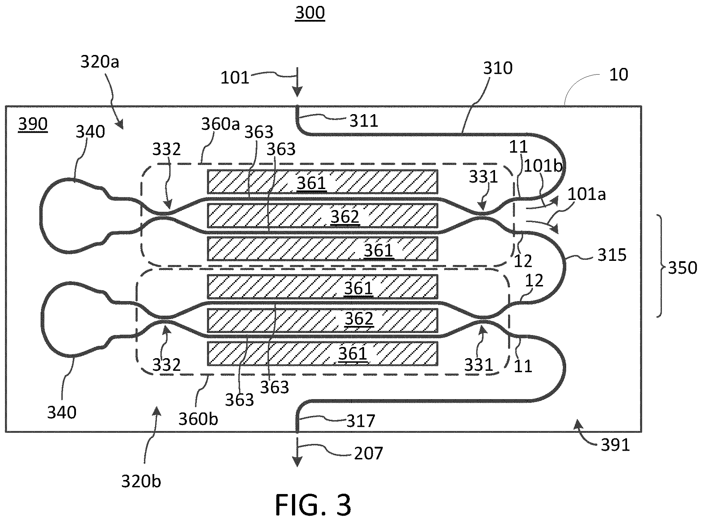

FIG. 3 schematically illustrates, in a plan view, an example electro-optic (EO) modulator 300 integrated in a photonic chip 10, e.g. along a top surface 391 of a substrate 390 of the chip. The EO waveguide modulator 300 is an embodiment of the optical modulator 200 and may be referred to as the FP modulator 300, the FP/MZM modulator 300, or simply as the modulator 300. The substrate 390 may be a single-layer or multi-layer structure, whose top surface 391 is roughly or substantially planar. The substrate 390 may be, for example, a silicon substrate, a silicon-on-insulator (SOI) substrate, a sapphire substrate, or any other suitable substrate. The modulator 300 includes an optical waveguide 310 disposed upon the top surface 391 such that some parts thereof form an integrated, e.g. planar, FP cavity 350. The FP cavity 350 comprises an optical waveguide segment 315 connected between two planar WLMs 320a and 320b, commonly referred to herein as the WLMs 320 and operating as the mirrors of the FP cavity 350. In the illustrated example, each of the WLMs 320a and 320b includes a corresponding integrated MZM, i.e. an MZM 360a and an MZM 360b respectively, commonly referred to herein as the MZMs 360. The folded configuration of the FP cavity 350 allows reducing the length of the modulator 300 typically to approximately the length of one of the WLMs 320. In other implementations, the MZMs 360 may be linearly aligned along a common axis, or along respective intersecting axes, and the waveguide segment 315 interconnecting them may or may not be straight.

Each of the MZMs 360 includes a pair of optical waveguide segments 363 ("MZM arms 363") connected in parallel between two integrated 2x2 photonic couplers 331 and 332, each implemented as a directional optical waveguide coupler in the shown example. In another example, 2x2 multi-mode interference (MMI) couplers could be used. The couplers 331 and 332 may each be, e.g., a 3 dB coupler, splitting light received into one of the ports between a pair of opposing ports in approximately equal parts. Free ports 11, 12 of the coupler 331 ("input coupler 331") serve as the input and output ports of the corresponding WLM 320a or the WLM 320b, with ports 12 thereof being interconnected by the optical waveguide segment 315 to form the FP cavity 350. The second, distal (from the FP cavity 350) coupler 332 ("distal coupler 332") of each MZM 360 is terminated by a waveguide loop 340 interconnecting the two free ports of said coupler ("loop-terminated MZM"). The remaining free ports 11 of the WLMs 320a and 320b are connected to end segments 311 and 317 of the optical waveguide 310 and serve as the input/output optical ports of the FP modulator 300.

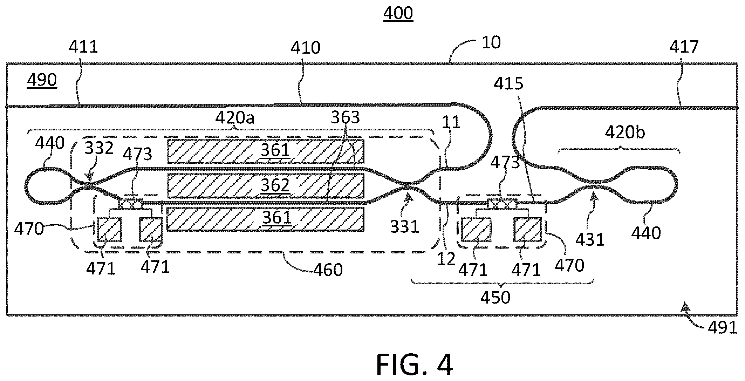

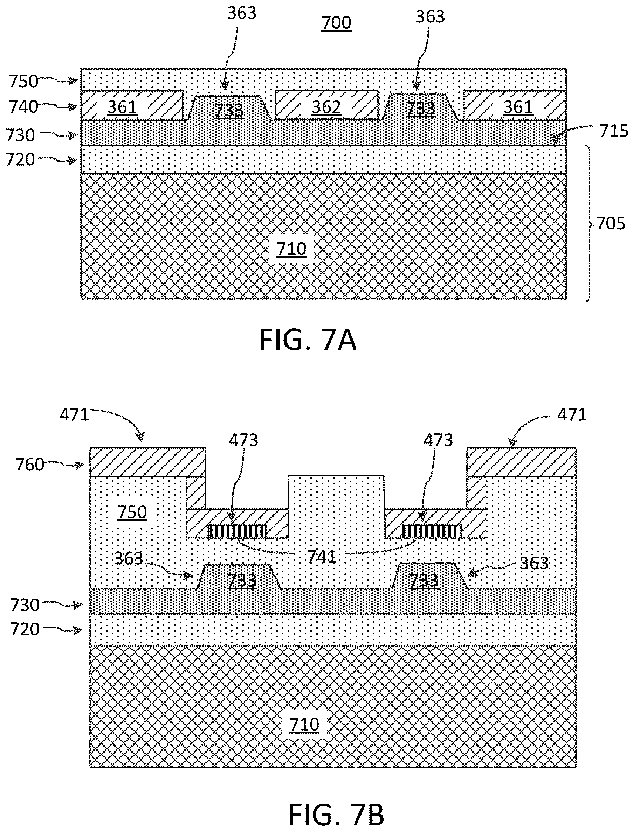

In an example implementation, the optical waveguide 310, at least in the segments thereof forming the MZM arms 363 of the MZMs 360, has an optical waveguide core comprising, typically, suitable electro-optic (EO) material exhibiting Pockels effect, such as lithium niobate, e.g. thin-film lithium niobate (TFLN) (e.g. 730, FIG. 7A). Each of the MZMs 360 further includes a set of drive electrodes 361, 362, 361 for controlling the phase of light propagating in the MZM arms 363. In the illustrated example, the set includes a signal electrode 362 extending between the MZM arms 363, and two ground electrodes 361 extending along the signal electrode 362 at opposite sides of the MZM arms 363 to induce oppositely directed electrical fields in the MZM arms 363. Light propagating in the MZM arms 363 of each of the MZMs 360 may be push-pull modulated, e.g., by connecting ground electrodes 361 of the MZM 360 to ground and applying an alternating RF voltage signal to a signal electrode 362 of the MZM. Each of the MZMs 360 may further include one or more bias sections (see e.g. FIGs. 4-6, not shown in FIG. 3) to control an operating point of the MZM, as known in the art. In a typical traveling-wave (TW) modulator implementation, the two ground electrodes 361 and the signal electrode 362 of each of the MZMs 360 may form a co-planar microwave transmission line, which may be suitably terminated at one end thereof (not shown).

By way of example, in operation input light 101 may be launched into the first WLM 320a via the first end segment 311 of the waveguide 310 and port 11 of the input coupler 331 of the first WLM 320a. The input coupler 331 splits the light 101 between the MZM arms 363 to propagate toward the distal coupler 332, where the corresponding parts of the light are again split between two output ports of the distal coupler 332 and then looped back by the loop waveguide 340 into the MZM 360a in a crisscross manner. The looped-back light then propagates along the MZM arms 363 in the return direction toward the input coupler 331. Depending on the phase accrued by the different parts of the light 101 by the back-and-forth propagation in the WLM 320a, the input coupler 331 may direct a first fraction of the light 101 to leave the WLM 320a via port 12 as in-coupled light 101a, and to direct a second fraction of the light 101 to leave the WLM 320a via port 11 as the "lost light" 101b. The in-coupled light 101a adds to the light already in the cavity 350 that propagates toward the WLM 320b. The WLM 320b, who may operate similarly to WLM 320a, reflects a first fraction of the received light back into the FP cavity 350 to propagate toward the WLM 320a, and transmits a second fraction of the received light via the output port 11 and the waveguide 317 as the output modulator light 207.

The push-pull modulation of the MZM 360a by an alternating voltage signal of a suitable amplitude may result in the WLM 320a operating as a light steering switch, directing more of the light 101 to leave the WLM 320a via either port 11 or port 12 in alternating manner, thereby modulating the FP coupling efficiency of the WLM 320a $|\kappa_{12}|^2$ between a high value $|\kappa_{12}|^2$ max and a low value $|\kappa_{12}|^2_{min}$, corresponding to an extinction ratio of the in-coupled light 101a $R_{cxt1} = |\kappa_{12}|^2_{max}/|\kappa_{12}|^2_{min}$. Similarly, driving the MZM 360b with a pulsed voltage signal may modulate the out-coupling efficiency of the WLM 320b $|\kappa_{21}|^2$ between a high value $|\kappa_{21}|^2_{max}$ and a low value $|\kappa_{21}|^2_{min}$, corresponding to an input-referenced extinction ratio at the output of the WLM 320b $R_{cxt2} = |\kappa_{21}|^2_{max}/|\kappa_{21}|^2_{min}$. Synchronized driving of the MZMs 360a and 360b may result in the output modulator light 207 of the modulator 300 being modulated with an extinction ratio that is greater than either $R_{cxt1}$ or $R_{cxt2}$.

FIG. 3 illustrates an example configuration of an FP/MZM coupling modulator wherein each of the FP cavity mirrors, the WLMs 320a and 320b, includes an MZM 360 that in operation may be driven by a corresponding high-speed RF modulation signal; accordingly, the modulator configuration shown in FIG. 3 may be referred to herein as the dual-drive configuration. In some implementations, the two MZMs 360 at opposite sides of the FP cavity 350 may be nominally identical. In some other implementations, the two MZMs 360 at opposite sides of the FP cavity 350 may differ from each other.

FIGs. 4-6 illustrate examples of FP/MZM coupling modulators in a single-drive configuration, i.e. where only one of the FP cavity mirrors includes an MZM. Here, the terms "single-drive" and "dual-drive" refer to the presence of optical modulators in either just one or both FP cavity mirrors, respectively, and do not limit the number of separately driven segments in the corresponding MZMs.

FIG. 4 illustrates an example integrated FP/MZM coupling modulator 400 ("FP modulator 400") having a single-drive configuration. In the FP modulator 400, an optical waveguide segment 415 is connected between an active WLM 420a and a passive WLM 420b, such as to form an FP cavity 450 wherein the WLM 420a and WLM 420b function as FP mirrors. The FP modulator 400 of FIG. 4 is a modification of the FP modulator 300 of FIG. 3 and includes several of the same elements, which are indicated in FIGs. 3 and 4 with same reference numerals and may not be described here again. In the illustrated example, the optical waveguide 410 includes end waveguide segments 411 and 417, which are examples of the end segments 311 and 317 of the optical waveguide 310 of FIG. 3. In various implementations, each of the end waveguide segments 411 and 417 may be used as the input and/or output optical waveguide, or optical port, of the FP modulator 400.

Similarly to the FP modulator 300, the FP modulator 400 may be implemented as a PIC in a photonic chip 10, the PIC including an optical waveguide 410 disposed along a surface 491 of a substrate 490 and integrated with the substrate. The chip 10, the substrate 490, the surface 491, and the optical waveguide 410 may be examples of the chip 10, the substrate 390, the surface 391, and the optical waveguide 310 described above with reference to FIG. 3.

The WLM 420a is an example implementation of the WLM 320a or WLM 320b described above. The WLM 420a includes a loop-terminated MZM 460, having a set of drive electrodes 361, 362, 361 and two output ports interconnected by a waveguide loop 440, generally as described above with reference to the MZMs 360 and the waveguide loops 340. The MZM 460 further includes an MZM bias section 470 to control a bias setting of the MZM 460, i.e. the MZM transmission from port 11 to port 12 in the absence of a voltage signal applied to the signal electrode 362. In the example illustrated in FIG. 4, the bias section 470 is a thermal tuner (TT) configured to locally adjust the refractive index of one or both of the MZM arms 363 by heating. The TT 470 includes a bias electrode 473 adjacent to a segment of one of the waveguide arms of the MZM 460, e.g. directly over the segment. In this example, the bias electrode 473 is a heating element electrically connected between two metal contact pads 471, which are configured to provide a tunable voltage across the bias electrode 473. Another TT 470 may be provided at the optical waveguide segment 415 to control the optical phase accrued by light propagating in the FP cavity 450 between the WLM 420a and 420b, e.g. to tune the resonance wavelengths of the FP cavity 450. The couplers 331 and 332 of the MZM 460 may each be, e.g., a 3 dB coupler, splitting light received into one of the ports between a pair of opposing ports in approximately equal parts.

The FP modulator 400 differs from the FP modulator 300 in that the WLM 420b is passive, and in the illustrated embodiment comprises a 2x2 waveguide coupler 431 terminated at one side thereof by a loop waveguide 440. The 2x2 waveguide coupler 431 may be an integrated optical coupler similar to the 2x2 optical waveguide couplers 331 and 332 of the MZM 460. The coupler 431 may be configured to direct more of the received light into the waveguide segment 415 than into the end waveguide segment 417. In some implementations, the coupler 431 may have a tunable coupling ratio. In an example operation wherein input light enters the FP modulator 400 via the optical waveguide segment 411 and the active WLM 420a, applying an electrical modulating signal to the MZM 460 modulates the in-coupling of light into the FP cavity 450, as described above with reference to FIG. 3 and the MZM 360a, thereby also modulating the transmission of light through the FP modulator 400. The out-coupling of light from the FP cavity 450 to the modulator output, e.g. via the output waveguide 417, in this example is fixed by the coupling ratio of the coupler 431 of the WLM 420b, which may differ from 50:50. Alternatively, the input light may also be launched into the FP cavity 450 via the passive WLM 420b; in this case, applying an electrical modulating signal to the MZM 460 modulates the out-coupling of light from the FP cavity 450, as described above with reference to FIG. 3 and the MZM 360b, thereby also modulating the transmission of light through the FP modulator 400. Note that the dimensions of different sections of the FP/MZM modulator 400 in FIG. 4 is not to scale; e.g., in a typical implementation the length L of the MZM electrodes 361, 362 along the axis of light propagation may greatly exceed the length of the bias electrode 473, each of the waveguide loops 440, and the optical couplers 331, 332, so that the overall length of the modulator may be mostly limited by the MZM electrode length L.

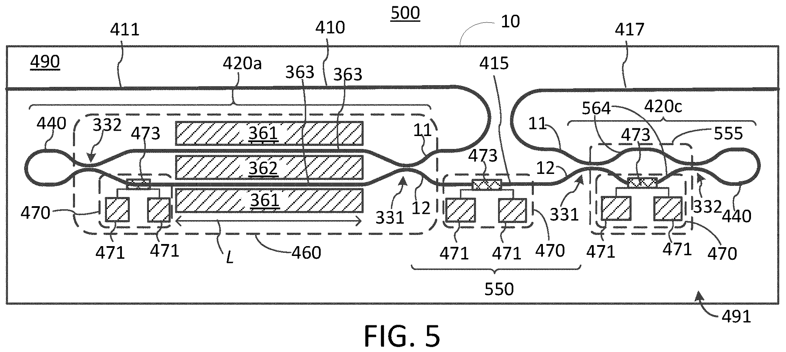

FIG. 5 illustrates a modification of the FP modulator 400, which is referred to herein as an FP modulator 500. Similarly to the FP modulator 400, the FP modulator 500 is a single-drive integrated coupling modulator and includes many of the same elements as the FP modulator 400, with same reference numerals indicating similar elements in FIGs. 4 and 5. In the illustrated example, the FP modulator 500 includes the optical waveguide segment 415 connected between the active WLM 420a as described above and a passive WLM 420c, which now includes a passive MZI 555. In the context of this specification, "passive" refers to the absence of an RF transmission line to drive the corresponding element with a high-speed data signal to modulate light propagating therethrough, but the element may otherwise be tunable during or prior to operation to provide a suitable bias, e.g. as described below. The WLMs 420a, the WLM 420c, and the optical waveguide segment 415 connected therebetween form an FP cavity 550.

In the example illustrated in FIG. 5, the MZI 555 includes a pair of integrated 2x2 optical waveguide couplers 331 and 332 interconnected by two optical waveguides forming MZI arms 564, and a version of the bias circuit 470 to control the optical phase difference between light signals propagating in the two arms 564 of the MZI 555, thereby controlling the optical coupling between the input/output ports 11, 12 of the WLM 420c and the transmission of light through the WLM 420c. The ability to tune the in-coupling or out-coupling of light through a passive FP cavity mirror of a single-drive FP modulator may be advantageous for optimizing modulation characteristics of individual devices. In operation, the MZI 555 may be biased such as to approximately maximize its transmission at a resonant wavelength of the FP cavity 550. By way of example, the bias of the MZI 555 may be set such that the WLM 420c transmits, e.g., 2-10 % of the incoming light.

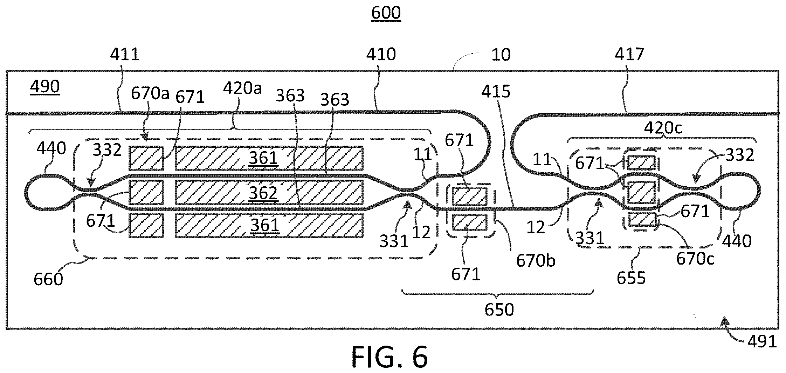

FIG. 6 illustrates an example FP modulator 600, which is a modification of the FP modulator 500 of FIG. 5, wherein the thermal tuners 470 in the bias sections of the MZM 460, the FP cavity 550, and the MZI 555 of the FIG. 5 FP modulator 500 are replaced with electro-optic tuners (EOTs) 670a, 670b, and 670c in MZM 660, FP cavity 650, and MZI 655 of FIG. 6, respectively. The EOTs 670a, 670b, and 670c each include at least a pair of electrodes 671 disposed at opposite side of a segment of a corresponding optical waveguide to electro-optically vary the reflective index of the waveguide responsive to a bias voltage applied between the adjacent pair of electrodes 671. Devices using EOTs instead of the TTs for bias control may have lower power consumption but may lead to a larger footprint of the device, as the thermal tuning typically allows varying the refractive index of the waveguide over a greater range. In the context of this specification, sections of the MZM, MZI, or the FP cavity including either the EOT-based bias elements (e.g. 670) or the TT-based bias elements (e.g. 470) may be referred to as the electrically tunable sections.

FIG. 7A schematically illustrates a partial cross-section across an MZM portion of an example photonic chip 700 that may be used to implement any of the FP modulators described above with reference to FIGs. 2-6. In this configuration, the chip 700 includes a substrate 705 having a planar surface 715. The substrate 705 includes a layer 720 of insulating material, such as but not limited to, e.g., silicon dioxide (SiO2), located over a base 710, typically but not exclusively a silicon substrate. In an example implementation, the substrate 705 is a SOI substrate. An optical layer 730, e.g. a layer of TFLN or other suitable EO material, is located over the insulating layer 720. Some implementations may include one or more other layers of, e.g., silicon, silicon dioxide, silicon nitride, located between the SOI substrate 705 and the optical layer 730. Each ridge 733 in the EO material of the optical layer 730 forms an optical core of one of the optical waveguide arms 363 of the MZM, e.g. any one of the MZMs 360a, 360b, 460, or 660 described above. Drive electrodes 361, 362 are metallic electrodes located in a layer 740 above the optical material of the layer 730 to form a co-planar electrical transmission line. A layer 750 of suitable cladding material, e.g. SiO2, is disposed over the ridges 733.

An electrode configuration similar to that illustrated in FIG. 7A may also be used in a bias control section of the MZM for an example MZM implementation with the EO tuning of the bias, e.g. the MZM 660 of FIG. 6.

FIG. 7B schematically illustrates a partial cross-section across a bias control portion of the MZM for an example implementation with thermal tuning of the bias, e.g. the MZM 460 of FIGs. 4 and 5. In this example, the bias electrodes 473 are implemented with nanowires 741 of suitable electrically conducting material having a relatively high resistance, e.g. NiChrome (NiCr), disposed on top of the cladding material layer 750 over the ridges 733. Other suitable materials such as Platinum (Pt), Titanium (Ti), etc. can also be used for the nanowires 741. Electrical contact pads 471 for the bias electrodes 473 (nanowires 741 in FIG. 7b) may be formed in a metallic layer 760 of a suitable low-resistance material, e.g. gold (Au).

In the illustrated example, the ridges 733 are so called "shallow ridges", i.e. a thinner layer of the EO material is still present away from the ridges 733; in other implementations, the EO material away from the ridges 733 may be absent, e.g. removed in manufacturing, and suitable cladding material optionally deposited over the ridges 733 to form optical cores of channel optical waveguides. In some implementations, the drive electrodes 361, 362 may be vertically offset relative to the optical cores of the waveguides 363. In some implementations, the optical cores of the waveguide arms 363 may be hybrid optical cores formed using optical guiding ribs of a suitable material, e.g., silicon or silicon nitride, having a greater refractive index than the cladding layers, and being disposed in a direct contact with a uniform layer of the EO material, e.g. the TFLN; examples of such MZMs are described, e.g., in the US patent publication US2023/0055077, which is incorporated herein by reference in its entirety.

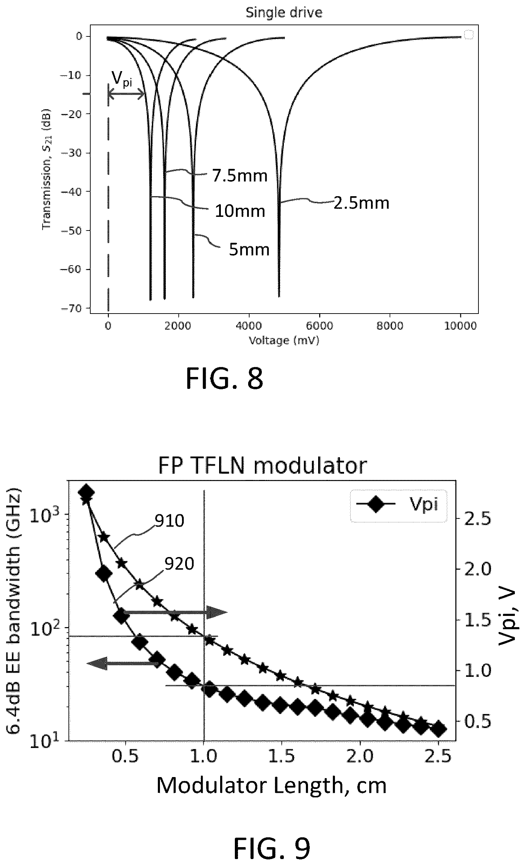

FIG. 8 illustrates transmission characteristics generated by a computer model of an example single-drive FP/MZM coupling modulator, such as the FP modulator of FIGs. 5 or 6, versus the drive voltage for four different MZM lengths L: 10mm, 7.5mm, 5mm, and 2.5mm. In the simulation, CW light was injected into the second, passive WLM (e.g. WLM 420c of FIGs. 5 or 6), and output from the active, MZM-comprising WLM (e.g. WLM 420a of FIGs. 5 or 6). The MZI bias of the second, passive WLM of the FP cavity was set to nearly maximize its reflectance at a resonant wavelength of the FP cavity. The length of the optical waveguide forming the FP cavity is ~ 500 micrometers ($\mu$m), the length of the optical waveguide loop is ~ 500 $\mu$m, the length of each of the directional couplers is ~ 200 $\mu$m. The optical loss in each section of the optical waveguide is assumed to be 0.2 dB/cm. The MZM is TFLN-based and is configured to have the VpiL product of about 2.5V·cm..

FIG. 9 illustrates simulation results for electrical-to-electrical bandwidth (910) and the effective Vpi (920) versus the MZM length for the FP/TFLN MZM modulator as described above with reference to FIG. 8. Here, the "effective Vpi" is defined as the drive voltage $V_d$ of the MZM that reduces the optical power at the output of the FP modulator by 15 dB, when the MZM is biased for maximum transmission at $V_d$=0. Perfect impedance and velocity matching conditions are assumed, with the RF loss for the electrodes of about $0.7 \mathrm{dBcm}^{-1}\sqrt{\mathrm{GHz}^{-0.5}}$.

As can be seen from FIG. 8, the positioning of the MZM in one of the mirrors of the FP cavity as described above may allow a substantial reduction in the VpiL product of the FP/MZM modulator, e.g. down to less than 1V·cm, or by a factor of about 3 in the simulated example; e.g., an FP/MZM modulator with a 1 cm long TFLN MZM may have a bandwidth of about 85 GHz (FIG. 9) and not require more than about 0.8V of peak drive voltage to pulse-modulate light with an on/off extinction ratio of ~15 dB, therefore potentially enabling direct modulation from a CMOS-based signal source.

The reduction of the VpiL product in the FP modulators may also allow reducing the MZM length to increase the modulation bandwidth of the modulator for a same operating voltage range, or to some extent to combine reducing the operating voltage range while at the same time increasing the modulator bandwidth as compared to the MZM itself.

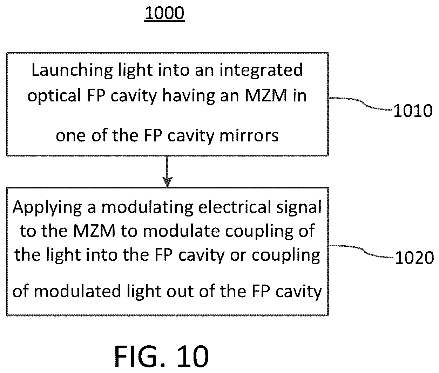

Referring to FIG. 10, an aspect of the present disclosure provides a method 1000 for modulating light using an integrated PIC, such as illustrated in FIGs. 2-6. The method may include (1010) launching the light into an optical waveguide Fabry-Perot (FP) cavity comprising two planar optical waveguide loop mirrors and an optical waveguide segment connected therebetween, at least one of the two planar optical waveguide loop mirrors comprising a Mach-Zehnder modulator (MZM). The method 1000 may further include (1020) applying a modulating electrical signal to the MZM to modulate a coupling of the light into the FP resonator. In some implementations, the method may comprise launching the light into the FP cavity via one of the two optical waveguide loop mirrors and outputting the modulated light from the other one of the two optical waveguide loop mirrors.

In some implementations, the method may comprise launching the light into the FP cavity via one of the two optical waveguide loop mirrors and collecting light reflected from said optical waveguide loop mirror as the modulated light.

The example optical FP/MZM modulators described above may have several advantages over conventional non-resonant MZM-based modulators. Indeed, the examples described may allow a considerable reduction of the modulator VpiL product without requiring such complex fabrication processes as deep under-etching of silicon substrate, or using substrates that complicate thermal management, such as quartz. The lower modulator VpiL product potentially enables a higher modulator bandwidth and a smaller footprint for a same or lower drive voltage. e.g., results illustrated in FIG. 9 suggest that an FP/MZM modulator having about 6mm long TFLN MZM may potentially enable a modulation bandwidth of about 300GHz with a $V\pi$ of about 2V. Conversely or simultaneously, the lower drive voltage of the FP/MZM modulators for a same or even smaller MZM length potentially provides at least the benefit of lowering the overall power consumption of the modulator, potentially enabling high-speed optical transmitters that are driven directly from CMOS chips without RF drive amplifiers.

The example optical FP/MZM modulators described above may also have several advantages over resonant micro-ring modulators where the MZM is a part of a high-finesse micro-ring cavity. Placing an MZM in one of the FO cavity mirrors rather than within a resonator enabled substantial decoupling of the FP cavity and MZM designs; e.g., in the FP/MZM modulators such as those described above, the MZM length may be varied without changing the resonant wavelengths and the FSR of the cavity. e.g., the FP cavity of the FP/MZM modulators may be configured to have the resonant wavelengths aligned with, e.g., an ITU grid, for any desired length of the MZM in one of the FP cavity mirrors. Furthermore, light of any such resonant wavelength may be modulated by the FP/MZM modulator described above without changing the bias settings thereof; this is in contrast with a micro-ring based MZI modulator where the cavity follows the sinusoidal response of the MZI modulator.

Furthermore, high-finesse (Q>1000) resonant optical modulators, e.g. micro-ring or racetrack based, may suffer from effects related to an increased photon lifetime in the cavity, which may both impose limitations on the modulation bandwidth of the modulator and lead to instabilities due to the photo-refractive (PR) effect in the EO material of the resonator. The PR effect, which may be significant in ferro-electric materials such as the LN, causes the refractive index of the EO material, and thus the resonant frequencies of the resonator, to be changed by light circulating in the cavity. The strength of the PR effect depends on the energy density of light in the material, with high-Q, high-finesse resonators accumulating more light energy within the resonator and thus more likely to suffer from the PR-induced instabilities. The FP/MZM modulators of the type described above may use significantly lower-finesse FP cavities than the reported micro-ring assisted high-Q modulators. In some implementations, the FP/MZM modulators of the type described above may be configured to have an average finesse of the FP cavity thereof of less than 50, or less than 20 typically, e.g. in the range from about 10 to about 5. The average finesse of the FP cavity here is the arithmetic mean of the maximum and minimum values of the FP cavity finesse in operation, i.e. when the transmission of the MZM(s) in the WLM(s) of the FP cavity is modulated by a data signal.

The examples of optical modulators described above are not intended to be limiting, and many variations will become apparent to a skilled reader having the benefit of the present disclosure, including different waveguide and electrode configurations. For example, the optical waveguide arms of any of the MZMs described above may include electro-optical materials other than lithium niobate, including but not limited to other ferroelectric materials such as thin-film lithium tantalate and thin-film barium titanate, or semiconductor materials, e.g. silicon, silicon carbide, or compound semiconductors such as InP or GaAs alloys, which may or may not include PN junctions. The FP/MZM coupling modulators such as those described above may also operate in reflection, e.g. using an optical circulator to separate the output, modulated light from the input CW light.

According to an example embodiment disclosed above, e.g., in the summary section and/or in reference to any one or any combination of some or all of FIGs. 1-9, provided is an apparatus comprising an electro-optical (EO) modulator (e.g., 200, FIG. 2; 300, FIG. 3; 400, FIG. 4; 500, FIG. 5; 600, FIG. 6; 700, FIG. 7A). The EO modulator may be integral with a substrate (e.g. 390, FIG. 3; 490, FIGs. 4-6; 705, FIG. 7A), e.g. disposed along a top surface (e.g. 391, FIG. 3; 491, FIGs. 4-6; 715, FIG. 7A) of the substrate. The EO modulator comprises an optical waveguide segment (e.g., 115, FIG. 2; 315, FIG. 3; 415, FIGs. 4-6) connected between two optical waveguide loop mirrors (e.g., 220a and 120b, FIG. 2; 320a and 320b, FIG. 3; 420a and 420b, FIG. 4; 420a and 420c, FIGs. 5 and 6). At least one of the two optical waveguide loop mirrors (e.g., 220a, FIG. 2; 320a and 320b, FIG. 3; 420a, FIGs. 4 - 6) comprises a Mach-Zehnder modulator (MZM) (e.g., 230, FIG. 2; 360a or 360b, FIG. 3; 460, FIGs. 4 - 5, and 660, FIG. 6).

In some implementations, the MZM may comprise two optical waveguide arms (e.g. 363, FIGs. 3-6) connected between two 2x2 optical waveguide couplers (e.g. 331 and 332, FIGs. 3-6. The at least one of the two optical waveguide loop mirrors may further comprise a loop waveguide (e.g. 140, FIG. 2; 340, FIG. 3; 440, FIGs. 4-6) interconnecting two outer ports of one of the two 2x2 optical waveguide couplers. At least one of the 2x2 optical waveguide couplers (e.g. 130, FIG. 2; 331 and/or 332, FIGs. 3-6; 431, FIG. 4) may be, e.g., a directional optical waveguide coupler.

In any of the above implementations, the other of the two optical waveguide loop mirrors (e.g. 120b, FIG. 2; 420b, FIG. 4; 420c, FIGs. 5, 6) may comprise at least one 2x2 optical waveguide coupler (e.g., 130, FIG. 2; 332, FIGs. 3, 5, 6; 431, FIG. 4) connected to a loop optical waveguide (e.g., 140, FIG. 2; 340, FIG. 3; 440, FIGs. 4-6).

In any of the above implementations, the MZM may comprise a layer of ferro-electric material (e.g. 730, FIGs. 7A and 7B) disposed over the top surface of the substrate. In some implementations, the ferro-electric material may comprise lithium niobate. In some implementations, the ferro-electric material may comprise lithium tantalate. In some implementations, the ferro-electric material may comprise barium titanate.

In any of the above implementations, the planar EO modulator may comprise a set of electrodes (e.g. 361, 362, 361, FIGs. 3-7A) configured to electro-optically modulate light in the MZM (e.g. 360a or 360b, FIG. 3; 460, FIGs. 4-5, and 660, FIG. 6).

In any of the above implementations, the other of the two optical waveguide loop mirrors may comprise another MZM (e.g. 360b, FIG. 3), a 2x2 waveguide coupler (e.g. 431, FIG. 4), or an MZI (e.g. 555, FIG. 5 or 655, FIG. 6). In some implementations, the MZI may comprise a bias tuning section (e.g., 470, FIG. 5; 670c, FIG. 6).

In any of the above implementations, the optical waveguide segment and the two optical waveguide loop mirrors may form a planar Fabry-Perot cavity (e.g., 250, FIG. 2; 350, FIG. 3; 450, FIG. 4; 550, FIG. 5, or 650, FIG. 6). In any of such implementations, an input optical waveguide (e.g., 111 or 117, FIG. 2; 311, FIG. 3; 411 or 417, FIGs. 4-6) may be connected to launch light into the planar Fabry-Perot cavity via one of the two optical waveguide loop mirrors (e.g., 220a or 120b, FIG. 2; 320a, FIG. 3; 420a or 420b, FIG. 4; 420a or 420c, FIGs. 5, 6). An output optical waveguide (e.g., 117 or 111, FIG. 2; 317 or 311, FIG. 3; 417 or 411, FIGs. 4-6) may be connected to output modulated light from the planar Fabry-Perot cavity via one of the two optical waveguide loop mirrors (e.g., 220b or 220a, FIG. 2; 320b or 320a, FIG. 3; 420b or 420a, FIG. 4; 420c or 420a, FIGs. 5, 6).

In any of the above implementations, the optical waveguide segment (e.g. 115, 315, or 415) may comprise an electrically tunable section (e.g., 470, FIGs. 4 and 5; 670b, FIG. 6).

In any of the above implementations, one or more of the 2x2 optical waveguide couplers (e.g. 130, FIG. 2; 331 and/or 332, FIGs. 3-6; 431, FIG. 4) may be replaced with a multi-port $M \times N$ optical coupler, with $M, N \geq 2$; e.g. a 3x2 optical coupler that interconnects a pair of ports at one side thereof with three (2+1) optical ports at the opposite side of the coupler; the added port may be used, e.g. to tap off a small fraction of light, e.g. for monitoring.

According to an example embodiment disclosed above, e.g., in the summary section and/or in reference to any one or any combination of some or all of FIGs. 1-9, provided is an apparatus comprising a planar electro-optical (EO) modulator (e.g., 200, FIG. 2; 300, FIG. 3; 400, FIG. 4; 500, FIG. 5; 600, FIG. 6; 700, FIG. 7) disposed along a top surface (e.g. 391, FIG. 3; 491, FIGs. 4-6; 715, FIG. 7A) of a substrate (e.g. 390, FIG. 3; 490, FIGs. 4-6; 705, FIG. 7A). The EO modulator comprises a ferro-electric optical layer (e.g. 730, FIGs. 7A, 7B) disposed over the top surface of the substrate. The EO modulator further comprises a planar optical waveguide Fabry-Perot (FP) cavity (e.g. 250, FIG. 2; 350, FIG. 3; 450, FIG. 4; 550, FIG. 5, and 650, FIG. 6) formed, at least in part, in the ferro-electric optical layer and comprising two planar optical waveguide loop mirrors (e.g. 220a and 120b, FIG. 2; 320a and 320b, FIG. 3; 420a and 420b, FIG. 4; 420a and 420c, FIGs. 5 and 6) and an optical waveguide segment (e.g., 115, FIG. 2; 315, FIG. 3; 415, FIGs. 4-6) connected therebetween. At least one of the two optical waveguide loop mirrors (e.g., 220a, FIG. 2; 320a and 320b, FIG. 3; 420a, FIGs. 4 - 6) comprises a Mach-Zehnder modulator (MZM) (e.g., 230, FIG. 2; 360a or 360b, FIG. 3; 460, FIGs. 4 - 5, 660, FIG. 6). In at least one implementation, the ferro-electric layer comprises one of thin-film Lithium Niobate, thin-film Lithium Tantalate and thin-film Barium Titanate.

According to an example embodiment disclosed above, e.g., in the summary section and/or in reference to any one or any combination of some or all of FIGs. 1-10, further provided is a method (e.g. 1000, FIG. 10) for modulating light (e.g., 101, FIGs. 2, 3). The method comprises (e.g. 1010, FIG. 10) launching the light into an optical waveguide FP cavity (e.g., 250, FIG. 2; 350, FIG. 3; 450, FIG. 4; 550, FIG. 5, 650, FIG. 6) comprising two planar optical waveguide loop mirrors (e.g., 220a and 120b, FIG. 2; 320a and 320b, FIG. 3; 420a and 420b, FIG. 4; 420a and 420c, FIGs. 5 and 6) and an optical waveguide segment (e.g., 115, FIG. 2; 315, FIG. 3; 415, FIGs. 4-6) connected therebetween, at least one of the two planar optical waveguide loop mirrors comprising an MZM (e.g., 230, FIG. 2; 360a or 360b, FIG. 3; 460, FIGs. 4 - 5, and 660, FIG. 6). The method further comprises (e.g. 1020, FIG. 10) applying a modulating electrical signal (e.g. 233, FIG. 2) to the MZM to modulate a coupling of the light into the FP cavity. In some implementations, the method may comprise electro-optically or thermally tuning a refractive index in the optical waveguide segment to adjust a resonant wavelength of the optical waveguide FP cavity, e.g. to a wavelength of the light being modulated. Any of the above implementations of the method may comprise using an electrically tunable MZI (e.g. 555, FIG. 5, 655, FIG. 6) in the other one of the two planar optical waveguide loop mirrors to tune at least one of: coupling of the light into the FP cavity, coupling of the light out of the FP cavity, and the finesse of the FP cavity.

In some implementations, the method may comprise launching the light into the FP cavity via one of the two optical waveguide loop mirrors (e.g., 220a or 120b, FIG. 2; 320a or 320b, FIG. 3; 420a or 420b, FIG. 4; 420a or 420c, FIGs.

5 and 6) and outputting the modulated light from the other one of the two optical waveguide loop mirrors (e.g., 120b or 220a, FIG. 2; 320b or 320a, FIG. 3; 420b or 420a, FIG. 4; 420c or 420a, FIGs. 5 and 6).

In some implementations, the method may comprise launching the light into the FP cavity via one of the two optical waveguide loop mirrors (e.g., 220a or 120b, FIG. 2; 320a or 320b, FIG. 3; 420a or 420b, FIG. 4; 420a or 420c, FIGs. 5 and 6) and collecting light reflected from said optical waveguide loop mirror as the modulated light (e.g., 207, FIGs. 2,3).

It will be further understood that various changes in the details, materials, and arrangements of the parts which have been described and illustrated in order to explain the nature of this disclosure may be made by those skilled in the art without departing from the scope of the disclosure, e.g., as expressed in the following claims. Various features described above with reference to a specific embodiment or embodiments may be combined with other embodiments.

Unless explicitly stated otherwise, each numerical value and range should be interpreted as being approximate as if the word "about" or "approximately" preceded the value or range.

The use of figure numbers and/or figure reference labels is intended to identify one or more possible embodiments of the claimed subject matter in order to facilitate the interpretation of the claim elements and equivalents. Such use is not to be construed as necessarily limiting the scope of those claims to the embodiments shown in the figures or described in the specification.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Furthermore, in the description above, for purposes of explanation and not limitation, specific details are set forth such as particular architectures, interfaces, techniques, etc. in order to provide a thorough understanding of the example embodiments described herein. In some instances, detailed descriptions of well-known devices, circuits, and methods are omitted so as not to obscure the description of the example embodiments with unnecessary detail. Thus, for example, it will be appreciated by those skilled in the art that block diagrams herein can represent conceptual views of illustrative circuitry embodying the principles of the technology. All statements herein reciting principles, aspects, and embodiments of the disclosure, as well as specific examples thereof, are intended to encompass both structural and functional equivalents thereof.

Thus, while example embodiments have been particularly shown and described with reference the figures, it will be understood by one skilled in the art that various changes in detail may be affected therein without departing from the spirit and scope of the invention as defined by the claims.

**Claims**

1. An apparatus comprising:

   an electro-optic (EO) modulator integrated upon a substrate and comprising an optical waveguide segment connected between two optical waveguide loop mirrors;
   wherein at least one of the two optical waveguide loop mirrors comprises a Mach-Zehnder modulator (MZM).

2. The apparatus of claim 1, wherein the optical waveguide segment and the two optical waveguide loop mirrors form a Fabry-Perot cavity.

3. The apparatus of claim 2, further comprising:

   an input optical waveguide connected to launch light into the Fabry-Perot cavity via one of the two optical waveguide loop mirrors; and
   an output optical waveguide connected to output modulated light from the Fabry-Perot cavity via one of the two optical waveguide loop mirrors.

4. The apparatus of claim 1, wherein one of the two optical waveguide loop mirrors comprises at least one optical waveguide coupler connected to a loop optical waveguide.

5. The apparatus of claim 1, wherein the optical waveguide segment comprises an electrically tunable section.

6. The apparatus of claim 1, wherein another one of the two optical waveguide loop mirrors comprises another MZM.

7. The apparatus of claim 1, wherein another one of the two optical waveguide loop mirrors comprises a Mach-Zehnder interferometer (MZI).

8. The apparatus of claim 7, wherein the MZI comprises a bias tuning section.

9. The apparatus of claim 1, wherein the MZM comprises a layer of ferro-electric material disposed over the substrate.

10. The apparatus of claim 9 wherein the ferro-electric material comprises lithium niobate.

11. The apparatus of claim 9 wherein the ferro-electric material comprises one of lithium tantalate and barium titanate.

12. The apparatus of claim 4 wherein the at least one optical waveguide coupler is a 2x2 optical coupler.

13. The apparatus of claim 1 wherein the MZM comprises two optical waveguide arms connected between two optical waveguide couplers, the at least one of the two optical waveguide loop mirrors further comprising a loop waveguide interconnecting two ports of one of the two optical waveguide couplers.

14. The apparatus of claim 13 wherein at least one of the optical waveguide couplers is a directional optical waveguide coupler.

15. The apparatus of claim 1 wherein the EO modulator comprised a set of electrodes configured to electro-optically modulate light in the MZM.

16. An apparatus comprising:
    an electro-optic (EO) modulator integrated upon a substrate and comprising:

    a ferro-electric layer disposed over the substrate;
    an optical waveguide Fabry-Perot (FP) cavity formed, at least in part, in the ferro-electric layer and comprising two optical waveguide loop mirrors and an optical waveguide segment connected therebetween, at least one of the two optical waveguide loop mirrors comprising an EO Mach-Zehnder modulator.

17. The apparatus of claim 16 wherein the ferro-electric layer comprises one of thin-film Lithium Niobate, thin-film Lithium Tantalate, and thin-film Barium Titanate.

18. A method for modulating light, comprising:

    launching the light into an optical waveguide Fabry-Perot (FP) cavity comprising two optical waveguide loop mirrors and an optical waveguide segment connected therebetween, at least one of the two optical waveguide loop mirrors comprising a Mach-Zehnder modulator (MZM); and
    applying a modulating electrical signal to the MZM to modulate a coupling of the light into the FP cavity.

19. The method of claim 18 further comprising electro-optically or thermally tuning a refractive index in the optical waveguide segment to adjust a resonant wavelength of the FP cavity.

20. The method of claim 18 comprising using an electrically tunable Mach-Zehnder interferometer (MZI) in another one of the two optical waveguide loop mirrors to tune at least one of: coupling of the light into the FP cavity, coupling of the light out of the FP cavity, and the finesse of the FP cavity.

100

101    111                                110              117   107

y

x    120a

11    11
115
140    130    130    140

12    12
150

120b

**FIG. 1**

200

210

101    111    V(t), 233            11    11   120b  110    117  207
115
140    MZM        130    140

220a    230    12    12

250

**FIG. 2**

FIG. 3

FIG. 4

FIG. 5

FIG. 6

EP 4 715 462 A1

363  700  363

750 →

740 →  361  733  362  733  361

730 →  715

720 →

705

710

FIG. 7A

471  471

760 →  473  473

750

363  733  741  733  363

730 →

720 →

710

FIG. 7B

FIG. 8

FIG. 9

<u>1000</u>

Launching light into an integrated
optical FP cavity having an MZM in

one of the FP cavity mirrors

—1010

Applying a modulating electrical signal
to the MZM to modulate coupling of
the light into the FP cavity or coupling

of modulated light out of the FP cavity

—1020

# FIG. 10

Europäisches
Patentamt

European
Patent Office

Office européen
des brevets

# EUROPEAN SEARCH REPORT

**Application Number**

**EP 25 20 2525**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 940 513 A1 (FUJIKURA LTD [JP]) 4 November 2015 (2015-11-04) * figures 4A, 4B * | 1-20 | INV. G02F1/225 |
| A | CN 114 978 327 A (INTEL CORP) 30 August 2022 (2022-08-30) * figure 1 * | 1-20 | |
| A | CN 105 700 082 A (UNIV SHANGHAI JIAOTONG) 22 June 2016 (2016-06-22) * figure 1 * | 1-20 | |

**TECHNICAL FIELDS SEARCHED (IPC)**

G02F

The present search report has been drawn up for all claims

| Place of search | Date of completion of the search | Examiner |
|---|---|---|
| The Hague | 3 February 2026 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2525

03-02-2026

| Patent document cited in search report | | Publication date | Patent family member(s) | | Publication date |
|---|---|---|---|---|---|
| EP 2940513 | A1 | 04-11-2015 | CN | 104885004 A | 02-09-2015 |
| | | | EP | 2940513 A1 | 04-11-2015 |
| | | | JP | 6211538 B2 | 11-10-2017 |
| | | | JP | 6435384 B2 | 05-12-2018 |
| | | | JP | 2018022172 A | 08-02-2018 |
| | | | JP | WO2014104309 A1 | 19-01-2017 |
| | | | SG | 11201505039R A | 28-08-2015 |
| | | | US | 2015293427 A1 | 15-10-2015 |
| | | | WO | 2014104309 A1 | 03-07-2014 |
| CN 114978327 | A | 30-08-2022 | CN | 114978327 A | 30-08-2022 |
| | | | EP | 4047414 A1 | 24-08-2022 |
| | | | KR | 20220118910 A | 26-08-2022 |
| | | | US | 2021175974 A1 | 10-06-2021 |
| CN 105700082 | A | 22-06-2016 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230055077 A